# EUROPEAN PATENT SPECIFICATION

(11) **EP 3 467 256 B1**
(45) Date of publication and mention of the grant of the patent: **05.05.2021**
(21) Application number: 18198924.5
(22) Date of filing: 05.10.2018
(51) Int. Cl.: F01D 5/00, F01D 5/28, B23K 26/364, B23K 26/382, B23P 6/00

(54) **MULTI-STEP CLEARANCE OF COATING**
MEHRSTUFIGE BESEITIGUNG EINER BESCHICHTUNG
DÉGAGEMENT DE REVÊTEMENT À PLUSIEURS ÉTAPES

(30) Priority: 05.10.2017 SG 10201708210P
(43) Date of publication of application: 10.04.2019
(73) Proprietor: Raytheon Technologies Corporation, Farmington, CT 06032 (US)
(72) Inventor: NG, Nelson, 489206 Singapore (SG); BASKARAN, Karthikeyan, 550412 Singapore (SG); KIN, Chee, 164020 Singapore (SG); GARIMELLA, Balaji Rao, 669556 Singapore (SG)
(74) Representative: Dehns

(56) References cited:
- EP-A1- 0 826 457
- EP-A1- 1 674 193
- EP-A1- 3 059 040
- GB-A- 2 383 769
- US-A1- 2013 020 293
- US-B1- 6 380 512

## Description

### BACKGROUND

Gas turbine engines, such as those which power aircraft and industrial equipment, employ a compressor to compress air that is drawn into the engine and a turbine to capture energy associated with the combustion of a fuel-air mixture. Some gas turbine engine components, such as blades and vanes of the turbine, include cooling holes in order to reduce the temperature of the component during use/operation. For example, film cooling holes may be used to form a protective thin film of cool air along an outer/exterior surface of a component. Also, one or more protective coatings may be applied to a substrate (e.g., base metal) of the component to further shield the component from the elevated temperatures in the engine. Such coatings may include a thermal barrier coating, where the thermal barrier coating frequently includes a bond coat and/or a top coat. The coatings typically include metal or ceramic material.

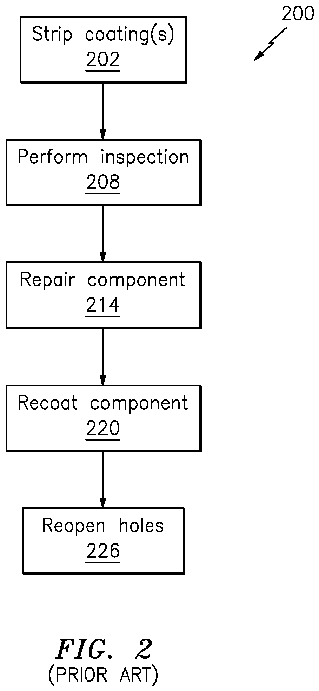

During an original manufacture of the component the cooling holes are machined into the component following the application of the coating(s) to provide for a clean/uniform hole through both the coating(s) and the substrate. FIG. 2 illustrates a flow chart of a method 200 for processing a component in accordance with the prior art. During engine maintenance procedures the coating(s) are stripped (block 202), one or more inspections are performed (block 208), repairs are provided to the component (e.g., the substrate) as needed (block 214), the component (e.g., the substrate) is recoated (block 220), and then the holes are reopened (block 226). Block 226 is frequently performed with the use of a laser beam emitted by a laser, where the laser beam is applied to the coating(s) of block 220 as part of a single application/stage with parameters of the laser/laser beam (e.g., focal point, power, number of shots/pulses, etc.) set in accordance with nominal settings.

The recoating of the component in block 220 may compromise the air flow through the holes, reducing the benefit of the cooling that is provided by those holes. For example, the recoating of block 220 may incur variations in terms of a coating thickness that is applied to a component (e.g., in terms of a first coating or first set of coatings applied to a first instance of the component relative to a second coating or second set of coatings applied to a second instance of the component). In regions where the coating is greater/thicker than a threshold (where the threshold is associated with a nominal coating thickness), at least a portion of the coating of block 220 may block/obstruct some or all of a hole following execution of block 226, thereby impeding or preventing a flow of air through the hole. This may be due to the laser beam power being less than is required to accommodate a "thick" coating. Conversely, in regions where the coating is less/thinner than a threshold (where the threshold is associated with a nominal coating thickness), execution of block 226 may result in a laser beam of block 226 striking a portion (e.g., an interior wall/surface) of the substrate. The laser beam striking the substrate may have a tendency to degrade the material of the substrate, leading to premature component wear/fatigue.

Additionally, a portion of the coating(s) applied in block 220 may chip/fray due to the execution of the block 226 (e.g., due to the application of the laser beam to a coating). This chipping may be a result of a coating being exposed to a peak power of the laser beam in an amount/time greater than a threshold. The chipping is a result of a coating being subject to a number of shots/pulses of the laser beam along a focal point of the laser beam in an amount that exceeds a threshold.

EP 1 674 193 A1 discloses a method for the fabrication of a through hole in a coated gas turbine engine workpiece using a laser beam. At the beginning of the laser processing, the focal point of the laser beam is located within the substrate. After penetrating the coating the laser beam diameter is reduced for example by shifting the focal point to the exterior surface of the coating.

EP 0 826 457 A1 discloses a method of drilling a hole in a coated gas turbine engine workpiece using a laser beam. The hole is produced by firstly focussing the laser beam such that the focal point is on the surface of the coating to drill a small diameter hole. Then the laser beam is refocused such that the focal point is spaced from the surface of the coating to drill a large diameter hole coaxially with the small diameter hole.

US 2013/020293 A1 discloses laser drilling methods of shallow-angled coated holes.

US 6 380 512 B1 discloses a method for removing coating material from a cooling hole of a gas turbine engine component

EP 3 059 040 A1 discloses a component repair using confined laser drilling.

### BRIEF SUMMARY

The following presents a simplified summary in order to provide a basic understanding of some aspects of the disclosure. The summary is not an extensive overview of the disclosure. It is neither intended to identify key or critical elements of the disclosure nor to delineate the scope of the disclosure. The following summary merely presents some concepts of the disclosure in a simplified form as a prelude to the description below.

According to an aspect of the invention, there is provided a method for processing a gas turbine engine component as claimed in claim 1. In some embodiments, the second offset corresponds to the focal point of the laser beam being located below the exterior surface by a threshold amount relative to a total thickness of the coating and the substrate. In some embodiments, the threshold amount is within a range of 55% to 65% of the total thickness. In some embodiments, the first number of pulses is different from the second number of pulses. In some embodiments, the second number of pulses is less than the first number of pulses. In some embodiments, the laser beam is applied at a first angle relative to the exterior surface of the coating during the first stage and a second angle relative to the exterior surface of the coating during the second stage. In some embodiments, the first angle is the same as the second angle. In some embodiments, the method further comprises subsequent to opening the first hole through the coating, translating the component, and subsequent to translating the component, opening a second hole through the coating, the second hole coaxial with a second hole in the substrate.

A system for carrying out the claimed method is described comprising: a component that includes a substrate and a coating coupled to the substrate, the substrate including a first hole through a thickness of the substrate, and a laser that applies a laser beam to the coating to open a second hole through the coating, the second hole coaxial with the first hole, where the laser is configured to apply the laser beam to the coating in a first stage and a second stage, the first stage characterized by a first number of pulses of the laser beam and a first offset corresponding to a focal point of the laser beam coinciding with an exterior surface of the coating, and the second stage characterized by a second number of pulses of the laser beam and a second offset corresponding to the focal point of the laser beam being located within a span of the substrate. In some embodiments, the second offset corresponds to the focal point of the laser beam being located below the exterior surface by a threshold amount relative to a total thickness of the coating and the substrate. In some embodiments, the threshold amount is within a range of 55% to 65% of the total thickness. In some embodiments, the first number of pulses is different from the second number of pulses. In some embodiments, the second number of pulses is less than the first number of pulses. In some embodiments, the laser beam is applied at an angle relative to the exterior surface of the coating during the first stage and the second stage. In some embodiments, the substrate includes a third hole through the thickness of the substrate, the system further comprising: a fixture that translates the component subsequent to the second hole being opened, and the laser applies the laser beam to open a fourth hole through the coating subsequent to the fixture translating the component, the fourth hole coaxial with the third hole. In some embodiments, the system further comprises a processor, and a non-transitory storage device having instructions stored thereon that, when executed by the processor, cause the laser to apply the laser beam to the coating. In some embodiments, the component is a turbine blade. In some embodiments, the component is a nozzle guide vane. In some embodiments, the first number of pulses of the laser beam and the second number of pulses of the laser beam are based on an identification of the laser.

### BRIEF DESCRIPTION OF THE DRAWINGS

The present disclosure is illustrated by way of example and not limited in the accompanying figures in which like reference numerals indicate similar elements. The drawing figures are not necessarily drawn to scale unless specifically indicated otherwise.
FIG. 1 is a side cutaway illustration of a geared turbine engine.
FIG. 2 illustrates a flow chart of a method for processing a component in accordance with the prior art.
FIGS. 3A-3D illustrate a component at various stages of processing in accordance with aspects of this disclosure.
FIG. 4 illustrates a flow chart of a method for processing a component in accordance with aspects of this disclosure.
FIG. 5 illustrates a computing system in accordance with aspects of this disclosure.
FIG. 6 illustrates an application of a laser beam to a coating in accordance with the prior art.
FIG. 7A illustrates a first application of a laser beam to a coating in accordance with aspects of this disclosure.
FIG. 7B illustrates a second application of a laser beam to a coating in accordance with aspects of this disclosure.
FIG. 8 illustrates a component placed on a fixture and arranged to translate relative to a laser in accordance with aspects of this disclosure.
FIG. 8A illustrates a laser placed on a fixture and arranged to translate relative to a component in accordance with aspects of this disclosure.

### DETAILED DESCRIPTION

It is noted that various connections are set forth between elements in the following description and in the drawings (the contents of which are incorporated in this specification by way of reference). It is noted that these connections are general and, unless specified otherwise, may be direct or indirect and that this specification is not intended to be limiting in this respect. A coupling between two or more entities may refer to a direct connection or an indirect connection. An indirect connection may incorporate one or more intervening entities or a space/gap between the entities that are being coupled to one another.

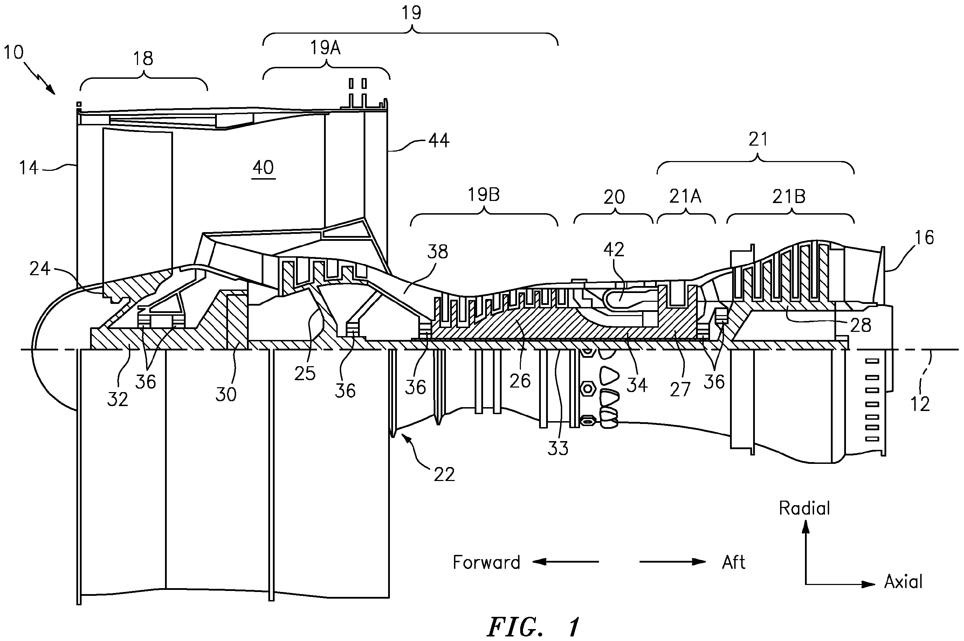

Aspects of the disclosure may be applied in connection with a gas turbine engine. FIG. 1 is a side cutaway illustration of a geared turbine engine 10. This turbine engine 10 extends along an axial centerline 12 between an upstream airflow inlet 14 and a downstream airflow exhaust 16. The turbine engine 10 includes a fan section 18, a compressor section 19, a combustor section 20 and a turbine section 21. The compressor section 19 includes a low pressure compressor (LPC) section 19A and a high pressure compressor (HPC) section 19B. The turbine section 21 includes a high pressure turbine (HPT) section 21A and a low pressure turbine (LPT) section 21B.

The engine sections 18-21 are arranged sequentially along the centerline 12 within an engine housing 22. Each of the engine sections 18-19B, 21A and 21B includes a respective rotor 24-28. Each of these rotors 24-28 includes a plurality of rotor blades arranged circumferentially around and connected to one or more respective rotor disks. The rotor blades, for example, may be formed integral with or mechanically fastened, welded, brazed, adhered and/or otherwise attached to the respective rotor disk(s).

The fan rotor 24 is connected to a gear train 30, for example, through a fan shaft 32. The gear train 30 and the LPC rotor 25 are connected to and driven by the LPT rotor 28 through a low speed shaft 33. The HPC rotor 26 is connected to and driven by the HPT rotor 27 through a high speed shaft 34. The shafts 32-34 are rotatably supported by a plurality of bearings 36; e.g., rolling element and/or thrust bearings. Each of these bearings 36 is connected to the engine housing 22 by at least one stationary structure such as, for example, an annular support strut.

As one skilled in the art would appreciate, in some embodiments a fan drive gear system (FDGS), which may be incorporated as part of the gear train 30, may be used to separate the rotation of the fan rotor 24 from the rotation of the rotor 25 of the low pressure compressor section 19A and the rotor 28 of the low pressure turbine section 21B. For example, such an FDGS may allow the fan rotor 24 to rotate at a different (e.g., slower) speed relative to the rotors 25 and 28.

During operation, air enters the turbine engine 10 through the airflow inlet 14, and is directed through the fan section 18 and into a core gas path 38 and a bypass gas path 40. The air within the core gas path 38 may be referred to as "core air". The air within the bypass gas path 40 may be referred to as "bypass air". The core air is directed through the engine sections 19-21, and exits the turbine engine 10 through the airflow exhaust 16 to provide forward engine thrust. Within the combustor section 20, fuel is injected into a combustion chamber 42 and mixed with compressed core air. This fuel-core air mixture is ignited to power the turbine engine 10. The bypass air is directed through the bypass gas path 40 and out of the turbine engine 10 through a bypass nozzle 44 to provide additional forward engine thrust. This additional forward engine thrust may account for a majority (e.g., more than 70 percent) of total engine thrust. Alternatively, at least some of the bypass air may be directed out of the turbine engine 10 through a thrust reverser to provide reverse engine thrust.

FIG. 1 represents one possible configuration for an engine 10. Aspects of the disclosure may be applied in connection with other environments, including additional configurations for gas turbine engines. Aspects of the disclosure may be applied in connection with non-geared engines.

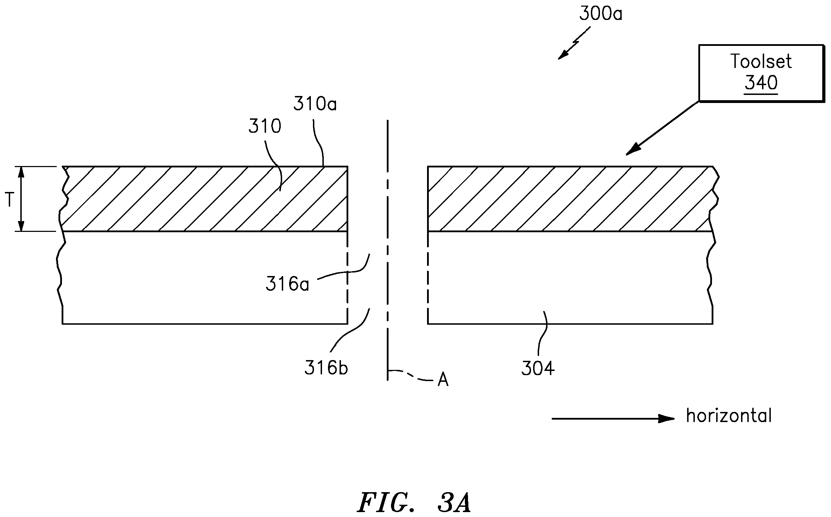

As described above, an engine may include one or more structures. For example, the turbine section 21 may include one or more blades or vanes that may be used to extract/capture energy associated with the combustion provided by the combustor section 20. Referring to FIG. 3A, a schematic depiction of, e.g., a blade 300a is shown. The blade 300a includes a substrate 304. In some embodiments, the substrate 304 may include a metal, such as for example nickel, steel, aluminum, etc. One or more coatings (represented by coating 310), such as for example a bond coat and a top coat, are applied/coupled to the substrate 304. The coatings 310 may include one or more materials, such as for example a ceramic material (e.g., yttria stabilized zirconia) or a metallic material (e.g., MCrAlY, where M is frequently at least one of iron, cobalt, or nickel, and X is an active element and stands for at least one of yttrium, silicon, a rare earth element, or hafnium).

A first hole 316a is formed through the substrate 304. A second hole 316b is formed through the coating 310. The holes 316a and 316b are arranged about an axis A, e.g., the holes 316a and 316b are co-axial. The holes 316a and 316b may be used to cool the blade 300a. For example, during engine operation the holes 316a and 316b may provide a thin film of cooling air on an exterior/outer surface 310a of the coating 310.

The holes 316a and 316b are shown in FIG. 3A as being oriented substantially perpendicular to the substrate 304 and the coating 310. For example, the holes 316a and 316b are shown in FIG. 3A as being oriented at an angle of approximately ninety degrees relative to the superimposed horizontal reference direction. A particular value for an angle that is used for the holes 316a and 316b may be based on one or more parameters of the blade 300a, such as for example a specification associated with the substrate 304 or the coating 310. Similarly, a size or dimension of the holes 316a and 316b may be based on one or more parameters of the blade 300a. While the holes 316a and 316b are shown as being substantially cylindrical, other shapes/form-factors for the holes 316a and 316b may be used.

The blade 300a shown in FIG. 3A may be indicative of an original equipment manufacture (OEM), and the holes 316a and 316b may be formed in the blade 300a following the application of the coating 310 to the substrate 304. During engine maintenance procedures, the blade 300a may be subject to further processing/reconditioning as described below.

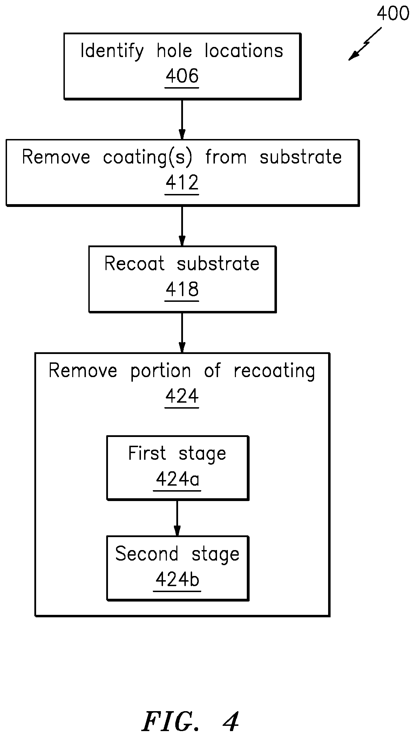

Referring to FIG. 4, a method 400 for processing/reconditioning a component is shown. The method 400 may be performed as part of an engine maintenance procedure. The method 400 is described below in conjunction with the blade(s) shown in FIGS. 3A-3D for ease in description and illustration. One will appreciate that the method 400 may be adapted to accommodate other components (e.g., other blades, vanes, nozzles, flaps, cases, liners, etc.). While the blades 300a-300d are described below as being separate blades (e.g., are shown with distinct reference characters in FIGS. 3A-3D), one will appreciate that they may represent the same blade at different points/steps of processing/conditioning in accordance with the execution of the method 400.

In block 406, a location of one or more holes, such as for example the holes 316a and 316b, may be identified. As part of block 406, a map/specification of a location of a hole may be consulted. The map/specification may be established during the original manufacture of the blade 300a and may be particular to the specific instance of the blade 300a. For example, the location of a hole may be specified with respect to a serial number (or other part tracking identifier) of the blade 300a. In some embodiments, the location of a hole may be specified on the basis of a make/model number of the blade 300a. The location of a hole may be based on an identification of one or more other features of the blade 300a, such as for example an external edge/surface of the blade 300a. In some embodiments, a location of a hole may be determined based on one or more scans incorporating one or more sensors as would be known to one of skill in the art. U.S. patent number 7,329,832 provides examples of such scanning.

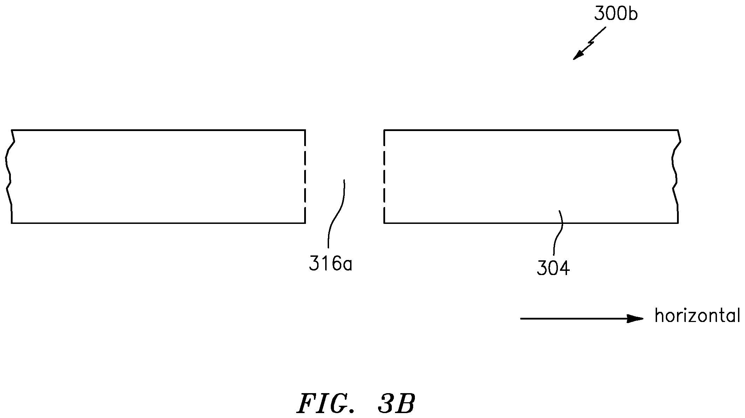

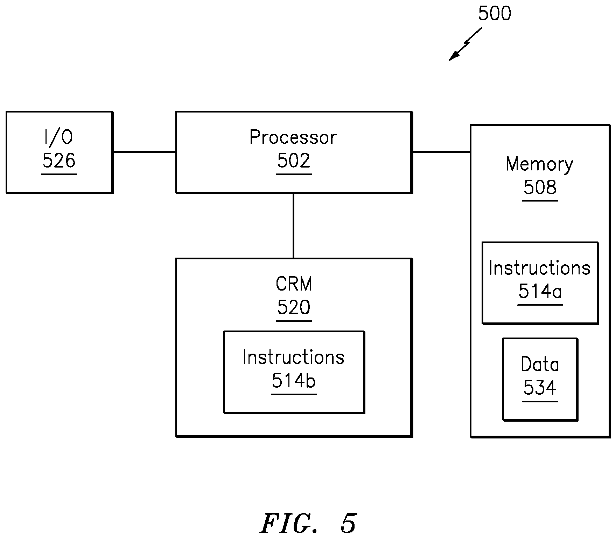

In block 412, one or more coatings 310 may be removed from the substrate 304. For example, a toolset 340 may be applied to the blade 300a (e.g., the coating 310) of FIG. 3A to generate a substrate 304/blade 300b (see FIG. 3B) that is substantially coat-free. For example, in comparing FIG. 3A to FIG. 3B, the blade 300b is substantially similar to the blade 300a but does not include the coating 310. The toolset 340 may be operative on the basis of one or more techniques, such as for example use of a water-jet, sand-blasting, etc. The toolset 340 may be operated manually. The toolset may be operated on at least a partially automated basis. To the extent that the toolset 340 is automated, the toolset 340 may include a system similar to the system 500 described below in conjunction with FIG. 5.

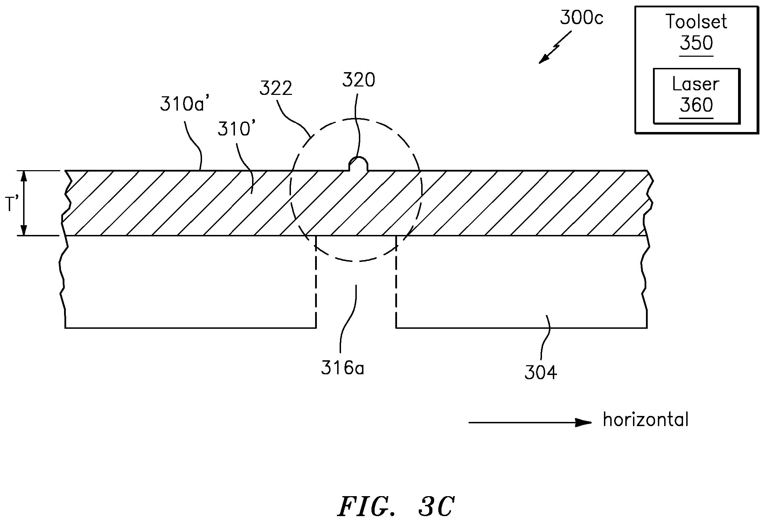

In block 418, the substrate 304/blade 300b of FIG. 3B is (re)coated to include a coating 310' in forming a blade 300c (see FIG. 3C). A thickness T' of the coating 310' may be substantially equal to a thickness T of the coating 310 (see FIG. 3A). In other words, the coating performed in block 418 may substantially restore the coating on the substrate 304 to the (original) thickness T of the coating 310. However, as described above, a portion of the coating 310' (as reflected by reference character 320) in proximity to the hole 316a may deviate from the corresponding portion of the coating 310 in terms of thickness. For example, the coating 310' may be substantially thicker (e.g., may be thicker in an amount greater than a threshold) than the coating 310 at a location corresponding to the portion 320.

As shown in FIG. 3C, the coating 310' in proximity to the hole 316a (as reflected by the portion inside the circle 322) may at least partially or completely block the hole 316a. As used herein, a blocking of the hole 316a includes at least a partial or complete obstruction of the hole 316a that precludes a flow of a fluid (e.g., air) through both the substrate 304 and the coating 310'.

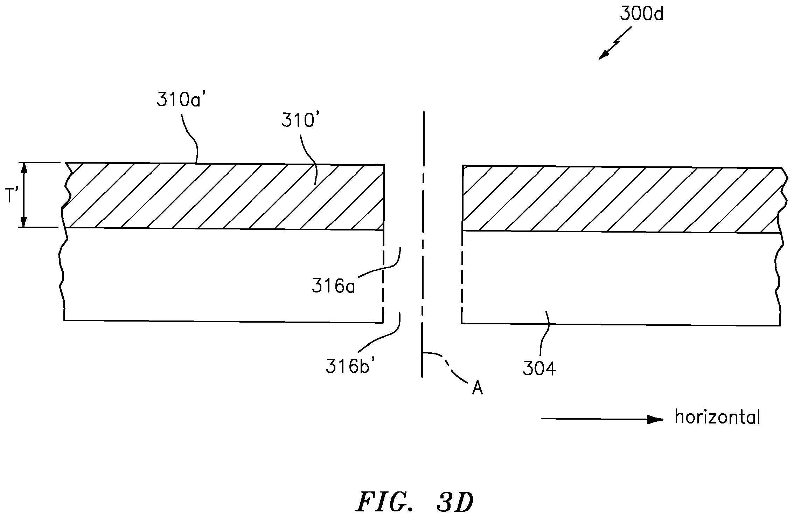

In block 424, the flow interfering portion 322 of the coating 310' is removed to generate a hole 316b' through the coating 310'. For example, in comparing FIG. 3C to FIG. 3D, in FIG. 3D a blade 300d may be formed via the removal of the flow interfering portion 322 of the coating 310'. The removal of the flow interfering portion 322 (inclusive of the excess coating portion 320) may be facilitated by application of a toolset 350 to the flow interfering portion 322. The holes 316a and 316b' may be arranged about the axis 'A' in a manner similar to the arrangement of the holes 316a and 316b about the axis 'A' shown in FIG. 3A.

In some embodiments the toolset 350 may correspond to the toolset 340 shown in FIG. 3A. In some embodiments, the toolset 350 includes a laser 360 that is used to remove the flow interfering portion 322.

In some embodiments, multiple applications of the toolset 350 are provided to remove the flow interfering portion 322 in block 424. For example, as part of block 424 the toolset 350 (e.g., the laser 360) is applied in multiple (e.g., two) stages to remove the flow interfering portion 322. These stages, denoted as blocks 424a and 424b in FIG. 4, are discussed in further detail below.

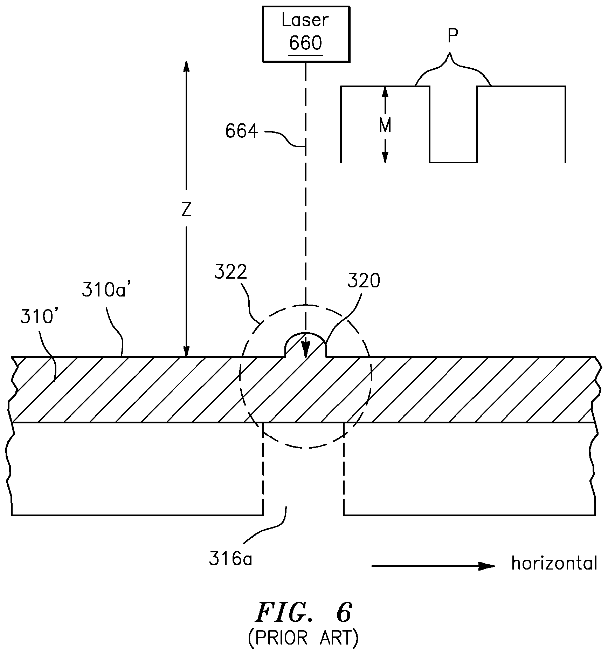

In the first stage 424a, one or more parameters of the toolset 350 ( the laser 360) may be adjusted (e.g., reduced/decreased) relative to a conventional technique (e.g., block 226 of FIG. 2). For example, and referring to FIG. 6, a conventional technique results in a laser 660 applying a beam 664 to the coating 310', where the beam 664 has a number of pulses P (where the number of pulses may be referenced to a given amount of time) and operates with a given power (e.g., amplitude/magnitude M) at an offset Z (where the offset Z is illustratively shown as being measured from the point of emission from the beam 664 relative to the exterior surface 310a' of the coating 310'). However, the parameters P, M, and Z just described in conjunction with the beam 664 may be inadequate due to the presence of the coating portion 320 (see FIG. 3C). For example, the parameters P, M, and Z may be inadequate to completely remove the portion 320, which may result in at least a partial blockage of the hole 316a of, e.g., FIG. 3D following the execution of block 226 of FIG. 2.

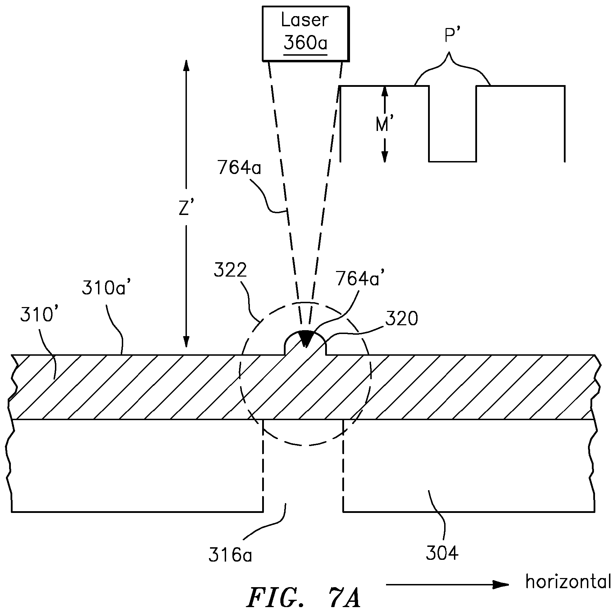

In contrast to the scenario depicted in FIG. 6, as shown in FIG. 7A (which may be representative of operations-in/execution of the first stage 424a of FIG. 4), a laser 360a (which may be the same as the laser 360) applies a beam 764a to the coating 310' (e.g., the portion 320/322), where the beam 764a operates on the basis of a number of pulses P' (potentially in a given amount of time, which amount of time may be the same as the amount of time associated with the pulses P described above in conjunction with FIG. 6) with a given power (e.g., magnitude M'), and at an offset Z'. One or more of the parameters P', M', and Z' of FIG. 7A may be different from the respective counterpart parameters P, M, and Z of FIG. 6. For example, the number of pulses P' may be less than the number of pulses P, the power (e.g., magnitude M') may be less than the power (e.g., magnitude M), and/or the offset Z' may be less than the offset Z. The offset Z' is specified in terms of a focal length of the beam 764a relative to the surface 310a'. The offset Z' is shown in FIG. 7A in terms of the merging of the beam 764a at a focal point 764a' coinciding with the surface 310a'.

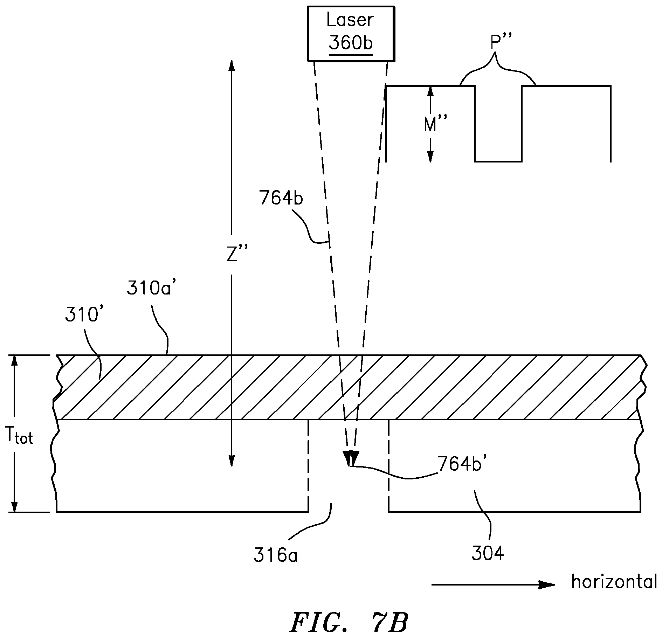

Referring to FIG. 7B (which may be representative of operations in/execution of the second stage 424b of FIG. 4), the laser 360b (which may be the same laser as laser 360 and/or the laser 360a) applies a beam 764b to the coating 310' (e.g., the portion 320), where the beam 764b operates on the basis of a number of pulses P" (potentially in a given amount of time, which amount of time may be the same as the amount of time associated with the pulses P described above in conjunction with FIG. 6 and/or the amount of time associated with the pulses P' described above in conjunction with FIG. 7A) with a given power (e.g., magnitude M"), and at an offset Z". One or more of the parameters P", M", and Z" of FIG. 7B may be different from the respective counterpart parameters P, M, and Z of FIG. 6 and/or the respective counterpart parameters P', M', and Z' of FIG. 7A. The offset Z" is specified in terms of a focal length of the beam 764b relative to the surface 310a'. The offset Z" is shown in FIG. 7B in terms of the merging of the beam 764b at a focal point 764b' coinciding within the span/thickness of the substrate 304. As an illustrative example, if the total thickness Ttot of the coating 310' and the substrate 304 is as shown in FIG. 7B, the focal point 764b' may be located approximately 60% (+/- 5%) of the total thickness Ttot below/interior to the surface 310a'.

Following the application of the beam 764b to the coating 310', the portion 320 may be completely removed as shown in FIGS. 3D and 7B.

Blocks of the method 400 may execute in an order or sequence that is different from what is shown in FIG. 4. For example, in some embodiments block 412 may execute prior to block 406, as doing so may provide a greater ability to identify the hole(s) 316a in the first instance without the obstruction presented by, e.g., the coating(s) 310. One or more of the blocks (or one or more portions thereof) of the method 400 may be optional in some embodiments. In some embodiments, additional blocks not shown in FIG. 4 may be included.

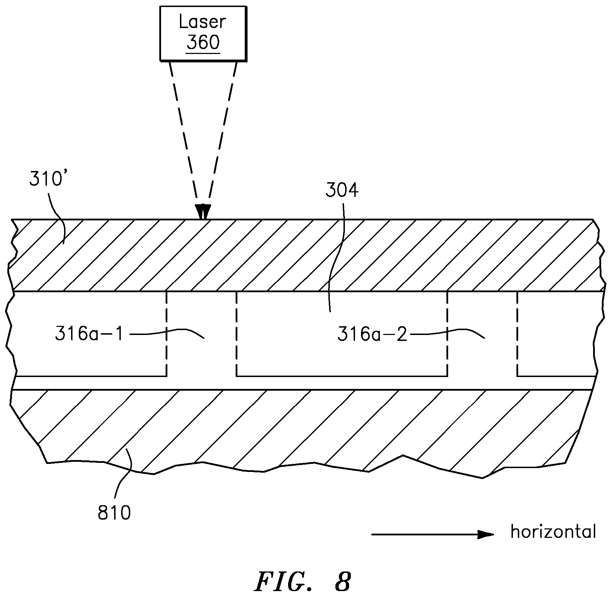

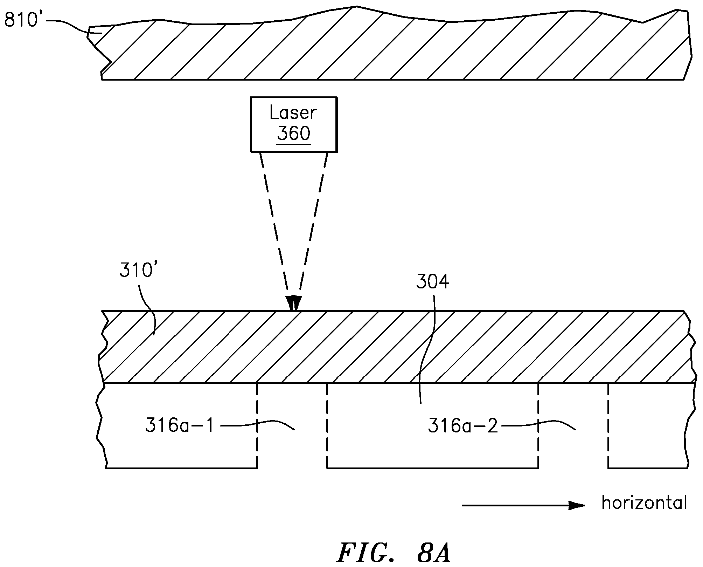

While some of the examples described above relate to opening a hole in a coating of a substrate of a component, one skilled in the art will appreciate that a component may include a substrate that includes multiple holes, such that a corresponding number of holes in a coating may need to be opened. To facilitate opening the holes, the component may be configured to move/translate relative to the laser. For example, and referring to FIG. 8, a component is shown that includes a substrate 304 that has holes 316a-1 and 316a-2 that are at least partially blocked by coating 310'. To open the holes 316a-1 and 316a-2 via the laser 360, the component (e.g., the substrate 304) may be placed on a fixture 810. The fixture 810 may be configured to move the component in the horizontal reference direction (illustratively, to the left in FIG. 8) once the coating 310' in proximity to the hole 316a-1 is opened in order to open the coating 310' in proximity to the hole 316a-2. The movement of the component (relative to the laser 360) by the fixture 810 may be based on a mapping/specification of the (location of the) holes 316a-1 and 316a-2.

FIG. 8 illustrates an embodiment where the fixture 810 moves the component to open holes in the coating 310. FIG. 8A illustrates an embodiment where a fixture 810' is coupled to the laser 360. The fixture 810' may cause the laser 360 to move relative to the component (e.g., the component may be kept stationary while the fixture 810' translates the laser 360 to open holes in the coating 310').

Turning to FIG. 5, a computing system 500 that may be used in some embodiments is shown. The system 500 may be used to perform one or more portions of the method 400 of FIG. 4 described above. At least a part of the system 500 may be included in the toolset 350 of FIG. 3C. For example, the system 500 may be used to control/regulate operation of the laser 360 in some embodiments.

The system 500 may include a processor 502 and a memory 508. The memory 508 may store instructions (e.g., instructions 514a) that, when executed by the processor 502, may cause the system 500 to perform one or more methodological acts, such as one or more of the acts described herein. At least a portion of the instructions (e.g., instructions 514b) may be stored on a computer-readable medium (CRM) 520, such as for example a non-transitory CRM. The instructions 514b of the CRM 520 may be used as an alternative to, or in addition to, the use of the instructions 514a of the memory 508. One or both of the memory 508 and the CRM 520, taken individually or collectively, may be referred to as a storage device. Much like the CRM 520, the storage device may be non-transitory in nature.

In some embodiments, the system 500 may include one or more input/output (I/O) devices 526. The I/O devices 526 may provide an interface between the system 500 and one or more other components or devices. The I/O devices 526 may include one or more of a graphical user interface (GUI), a display screen, a touchscreen, a keyboard, a mouse, a joystick, a pushbutton, a microphone, a speaker, a transceiver, a laser, a drill, etc. The I/O devices 526 may be used to output data in one or more formats (e.g., a visual or audio rendering).

The memory 508 may store data 534. The data 534 may include an identification of one or more of: a type, material, or thickness of coating that is used (see, e.g., FIG. 3A - coating 310; FIG. 3C - coating 310'), a type or material of a substrate that is used (see, e.g., FIG. 3A - substrate 304), a location of one or more holes (see, e.g., FIG. 3A - hole 316a), a type of laser that is used (see, e.g., FIG. 3C - laser 360), or an identification of the specific laser 360 that is used. An identification of the specific laser 360 that is used may allow for a removal of the flow interfering portion 322 of the coating 310' to take into account variations between different instances of the laser 360 (e.g., variations in parameters associated with the laser 360). Portions of the data 534 may be remotely located and accessible to the system 500 via an extranet or the internet of things.

The system 500 is illustrative. One skilled in the art will appreciate, based on a review of this disclosure, that the implementation of the system 500 may be achieved via the use of hardware, software, firmware, or any combination thereof.

Aspects of the disclosure may be used to remove/clear an obstruction from one or more cooling holes. Such an obstruction may include, for example, a coating that is applied during a recoating procedure. The cooling holes may be cleared without having an appreciable impact to a substrate of a component. In this respect, a cooling hole size and orientation may be controlled/regulated to conform to a particular specification. This may be contrasted with conventional techniques/procedures that would frequently result in one or more of: hole blockage due to excess coating, striking a substrate (e.g., a wall of the substrate) with a laser beam, or chipping of a coating. Aspects of the disclosure may reduce the energy, and hence heat, that is applied to a component (e.g., a coating), which may minimize/reduce the likelihood of an occurrence of the coating chipping. Aspects of the disclosure may extend component lifetime while at the same time reducing the time/costs associated with maintaining (e.g., recoating) a component.

Aspects of the disclosure have been described in terms of illustrative embodiments thereof. Numerous other embodiments, modifications, and variations within the scope of the appended claims will occur to persons of ordinary skill in the art from a review of this disclosure. For example, one of ordinary skill in the art will appreciate that the steps described in conjunction with the illustrative figures may be performed in other than the recited order, and that one or more steps illustrated may be optional in accordance with aspects of the disclosure. One or more features described in connection with a first embodiment may be combined with one or more features of one or more additional embodiments.

## Claims

1. A method for processing a gas turbine engine component that includes a substrate (304) and a coating (310') coupled to the substrate (304), the method comprising:
applying a laser beam (764a) to the coating (310') in a first stage (424a), the first stage (424a) with a first number of pulses (P') of the laser beam (764a) and a first offset (Z') corresponding to a focal point (764a') of the laser beam (764a) coinciding with an exterior surface (310a') of the coating (310'); and then
applying the laser beam (764b) to the coating (310') in a second stage (424b), the second stage (424b) with a second number of pulses (P") of the laser beam (764b) and a second offset (Z") corresponding to the focal point (764b') of the laser beam (764b) being located within a span of the substrate (304),
wherein execution of the first stage (424a) and the second stage (424b) open a first hole through the coating (310'), wherein the first hole through the coating (310') is coaxial with a first hole (316a) in the substrate (304).

2. The method of claim 1, wherein the laser beam (764a) is applied at a first angle relative to the exterior surface (310a') of the coating (310') during the first stage (424a) and a second angle relative to the exterior surface (310a') of the coating (310') during the second stage (424b).

3. The method of claim 2, wherein the first angle is the same as the second angle.

4. The method of any preceding claim, further comprising:
subsequent to opening the first hole through the coating (310'), translating the component; and
subsequent to translating the component, opening a second hole through the coating (310'), the second hole coaxial with a second hole (316a-2) in the substrate (304).

## Patentansprüche

1. Verfahren zum Bearbeiten einer Komponente eines Gasturbinentriebwerks, welche ein Substrat (304) und eine Beschichtung (310') beinhaltet, welche an das Substrat (304) gekoppelt ist, wobei das Verfahren Folgendes umfasst:
Anwenden eines Laserstrahls (764a) auf die Beschichtung (310') in einer ersten Stufe (424a), wobei die erste Stufe (424a) mit einer ersten Anzahl von Pulsen (P') des Lasterstrahls (764a) und einem ersten Versatz (Z') einem Brennpunkt (764a') des Laserstrahls (764a) entspricht, welcher mit einer äußeren Fläche (310a') der Beschichtung (310') übereinstimmt; und dann
Anwenden des Laserstrahls (764b) auf die Beschichtung (310') in einer zweiten Stufe (424b), wobei die zweite Stufe (424b) mit einer zweiten Anzahl von Pulsen (P") des Laserstrahls (764b) und einem zweiten Versatz (Z") dem Brennpunkt (764b') des Laserstrahls (764b) entspricht, welcher sich in einer Spanne des Substrats (304) befindet,
wobei ein Ausführen der ersten Stufe (424a) und der zweiten Stufe (424b) ein erstes Loch durch die Beschichtung (310') öffnet, wobei das erste Loch durch die Beschichtung (310') koaxial mit einem ersten Loch (316a) in dem Substrat (304) ist.

2. Verfahren nach Anspruch 1, wobei der Laserstrahl (764a) bei einem ersten Winkel bezogen auf die äußere Fläche (310a') der Beschichtung (310') während der ersten Stufe (424a) und bei einem zweiten Winkel bezogen auf die äußere Fläche (310a') der Beschichtung (310') während der zweiten Stufe (424b) angewendet wird.

3. Verfahren nach Anspruch 2, wobei der erste Winkel der gleiche ist wie der zweite Winkel.

4. Verfahren nach einem der vorstehenden Ansprüche, ferner Folgendes umfassend:
Übersetzen der Komponente nach dem Öffnen des ersten Lochs durch die Beschichtung (310'); und
Öffnen eines zweiten Lochs durch die Beschichtung (310') nach dem Übersetzen der Komponente, wobei das zweite Loch koaxial zu einem zweiten Loch (316a-2) in dem Substrat (304) ist.

## Revendications

1. Procédé de traitement d'un composant de moteur à turbine à gaz qui comporte un substrat (304) et un revêtement (310') couplé au substrat (304), le procédé comprenant :
l'application d'un faisceau laser (764a) au revêtement (310') dans une première étape (424a), la première étape (424a) ayant un premier nombre d'impulsions (P') du faisceau laser (764a) et un premier décalage (Z') correspondant à un point focal (764a') du faisceau laser (764a) coïncidant avec une surface extérieure (310a') du revêtement (310') ; puis
l'application du faisceau laser (764b) au revêtement (310') dans une seconde étape (424b), la seconde étape (424b) ayant un second nombre d'impulsions (P") du faisceau laser (764b) et un second décalage (Z") correspondant au point focal (764b') du faisceau laser (764b) étant situé dans les limites d'une étendue du substrat (304),
dans lequel l'exécution de la première étape (424a) et de la seconde étape (424b) ouvre un premier trou à travers le revêtement (310'), dans lequel le premier trou à travers le revêtement (310') est coaxial à un premier trou (316a) dans le substrat (304).

2. Procédé selon la revendication 1, dans lequel le faisceau laser (764a) est appliqué selon un premier angle par rapport à la surface extérieure (310a') du revêtement (310') pendant la première étape (424a) et selon un second angle par rapport à la surface extérieure (310a') du revêtement (310') pendant la seconde étape (424b).

3. Procédé selon la revendication 2, dans lequel le premier angle est identique au second angle.

4. Procédé selon une quelconque revendication précédente, comprenant en outre :
après l'ouverture du premier trou à travers le revêtement (310'), la translation du composant ; et
après la translation du composant, l'ouverture d'un second trou à travers le revêtement (310'), le second trou étant coaxial à un second trou (316a-2) dans le substrat (304).
